# EUROPEAN PATENT APPLICATION

(11) **EP 2 687 959 A1**
(43) Date of publication of application: **22.01.2014**
(21) Application number: 12758170.0
(22) Date of filing: 14.03.2012
(51) Int. Cl.: G06F 3/042, G06F 3/041

(54) **DETECTION DEVICE, INPUT DEVICE, PROJECTOR, AND ELECTRONIC APPARATUS**

(30) Priority: 15.03.2011 JP 2011056819; 02.03.2012 JP 2012046970
(71) Applicant: Nikon Corporation, Tokyo 100-8331 (JP)
(72) Inventor: KURIBAYASHI Hidenori, Tokyo 100-8331 (JP)
(74) Representative: Viering, Jentschura & Partner
(86) International application number: PCT/JP2012/056548
(87) International publication number: WO 2012/124730

(57) **Abstract**

A detection device (10) includes an imaging unit (15) which images a wavelength region of infrared light, an irradiation unit (11) which irradiates first infrared light for detecting the tip part of an indication part on a detection target surface and second infrared light to be irradiated onto a region farther away from the detection target surface than the first infrared light, and a detection unit (19) which detects an orientation of the indication part on the basis of an image imaged by the imaging unit (15) by irradiating the first infrared light and the second infrared light, and detects a position of the tip part on the detection target surface on the basis of an image region of the tip part extracted on the basis of an image imaged by irradiating the first infrared light and the detected orientation of the indication part.

## Description

### TECHNICAL FIELD

The present invention relates to a detection device, an input device, a projector, and an electronic apparatus.

Priority is claimed on Japanese Patent Application No. 2011-056819, filed March 15, 2011, and Japanese Patent Application No. 2012-046970, filed March 2, 2012, the contents of which are incorporated herein by reference.

### BACKGROUND

A detection device which detects an indication operation by a user and an input device using the detection device are known (for example, see Patent Document 1).

An input device described in Patent Document 1 has a configuration in which a user can directly indicate a projection image, in which the motion or the like of the finger of the user or a stylus of the user can be detected so as to detect the indication, and in which a character or the like can be input in accordance with the detected indication. At this time, for example, detection is made using reflection of infrared light. A push-down operation with the finger of the user is detected by, for example, analyzing the difference in an infrared image before and after the push-down operation of the finger.

### [Related Art Documents]

### [Patent Documents]

[Patent Document 1] Published Japanese Translation No. WO2003-535405 of PCT International Publication

### SUMMARY OF INVENTION

### PROBLEMS TO BE SOLVED BY THE INVENTION

However, in Patent Document 1, only the motion of the finger of the user or the stylus of the user is detected. Therefore, for example, when an indication is made from a lateral surface of the device, the indication may be erroneously detected.

An object of an aspect of the invention is to provide a detection device, an input device, a projector, and an electronic apparatus capable of reducing erroneous detection of an indication by a user.

### MEANS FOR SOLVING THE PROBLEM

An embodiment of the invention provides a detection device including an imaging unit which images a wavelength region of infrared light, an irradiation unit which irradiates first infrared light for detecting the tip part of an indication part on a detection target surface and second infrared light to be irradiated onto a region farther away from the detection target surface than the first infrared light, and a detection unit which detects an orientation of the indication part on the basis of an image imaged by the imaging unit by irradiating the first infrared light and the second infrared light, and detects a position of the tip part on the detection target surface on the basis of an image region of the tip part extracted on the basis of an image imaged by irradiating the first infrared light and the detected orientation of the indication part.

Another embodiment of the invention provides an input device including the detection device.

Still another embodiment of the invention provides a projector including the input device, and a projection unit which projects an image onto the detection target surface.

Yet another embodiment of the invention provides an electronic apparatus including the input device.

### ADVANTAGE OF THE INVENTION

According to aspects of the invention, it is possible to reduce erroneous detection of an indication by a user.

### BRIEF DESCRIPTION OF THE DRAWINGS

FIG. 1 is a perspective view illustrating an embodiment of the invention.
FIG. 2 is a block diagram showing an internal configuration of a projector in FIG. 1.
FIG. 3 is a side view showing a vertical direction light flux of a first infrared light irradiation unit in FIG. 1.
FIG. 4 is a plan view showing a horizontal direction light flux of the first infrared light irradiation unit in FIG. 1.
FIG. 5 is a side view showing a vertical direction light flux of a second infrared light irradiation unit in FIG. 1.
FIG. 6 is a side view showing a vertical direction light flux of a modified example of the second infrared light irradiation unit in FIG. 1.
FIG. 7 is a timing chart illustrating the operation of a detection device in FIG. 2.
FIG. 8 is a diagram showing an example of images which are used to illustrate the operation of the detection device in FIG. 2.
FIG. 9A is a diagram showing an example of a form of a hand of a user which is used to illustrate the operation of the detection device in FIG. 2.
FIG. 9B is a diagram showing an example of a form of a hand of a user which is used to illustrate the operation of the detection device in FIG. 2.
FIG. 10A is a first view showing an example of a form of a hand of a user and an example of a difference image which are used to illustrate the operation of the detection device in FIG. 2.
FIG. 10B is a first view showing an example of a form of a hand of a user and an example of a difference image which are used to illustrate the operation of the detection device in FIG. 2.
FIG. 11A is a second view showing an example of a form of a hand of a user and an example of a difference image which are used to illustrate the operation of the detection device in FIG. 2.
FIG. 11B is a second view showing an example of a form of a hand of a user and an example of a difference image which are used to illustrate the operation of the detection device in FIG. 2.
FIG. 12A is a third view showing an example of a form of a hand of a user and an example of a difference image which are used to illustrate the operation of the detection device in FIG. 2.
FIG. 12B is a third view showing an example of a form of a hand of a user and an example of a difference image which are used to illustrate the operation of the detection device in FIG. 2.
FIG. 13 is a timing chart illustrating an operation in another embodiment of the invention.
FIG. 14 is a diagram showing an example of images which are used to illustrate an operation in another embodiment of the invention.
FIG. 15 is a block diagram showing an example of an internal configuration of a projector according to another embodiment of the invention.
FIG. 16 is a first view showing an example of the operation of a detection device in FIG. 15.
FIG. 17 is a second view showing an example of the operation of the detection device in FIG. 15.
FIG. 18 is a diagram showing an example of the operation of a projector in FIG. 15.
FIG. 19 is a diagram showing an another example of the operation of the projector in FIG. 15.
FIG. 20 is a first view showing an another example of the operation of the detection device in FIG. 15.
FIG. 21 is a second view showing an another example of the operation of the detection device in FIG. 15.
FIG. 22 is a schematic view showing an example where the detection device in FIG. 15 is applied to a tablet terminal.
FIG. 23 is a block diagram showing an example of a configuration of the tablet terminal in FIG. 22.
FIG. 24 is a diagram showing an example of an infrared light irradiation unit and an imaging unit of the tablet terminal in FIG. 23.
FIG. 25 is a diagram showing an example of the infrared light irradiation unit and the imaging unit of the tablet terminal in FIG. 23.
FIG. 26 is a first view showing an another example of the imaging unit of the tablet terminal in FIG. 23.
FIG. 27 is a second view showing an another example of the imaging unit of the tablet terminal in FIG. 23.
FIG. 28 is a third view showing an another example of the imaging unit of the tablet terminal in FIG. 23.

### DESCRIPTION OF EMBODIMENTS

Hereinafter, embodiments of the invention will be described referring to the drawings.

### [First Embodiment]

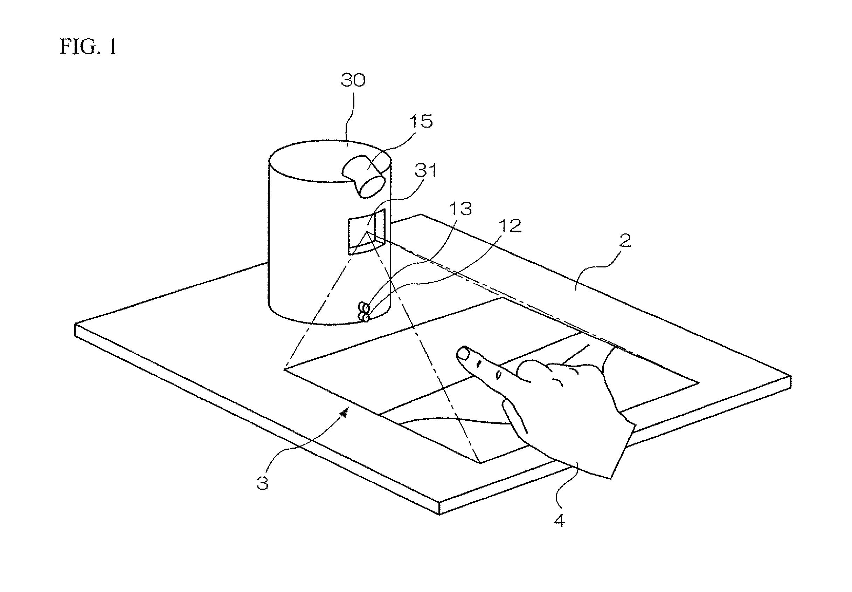

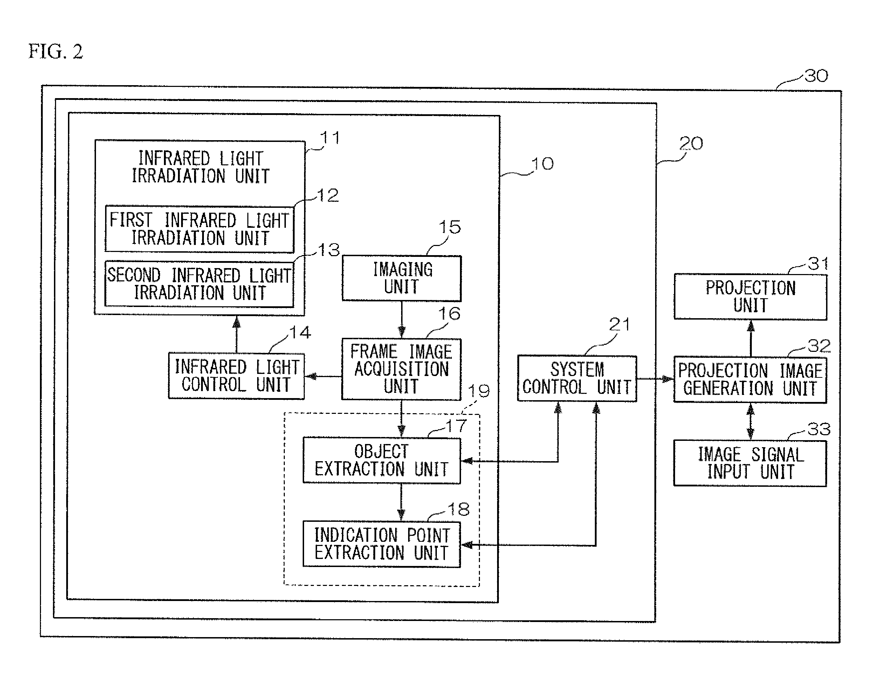

FIG. 1 is a perspective view illustrating a detection device as an embodiment of the invention. FIG. 2 is a block diagram illustrating a detection device as an embodiment of the invention. In the respective drawings, the same (or corresponding) configurations are represented by the same reference symbols.

A projector 30 shown in FIG. 1 has a detection device 10 (see FIG. 2) therein as a feature of the invention, and also includes (an irradiation port of) a projection unit 31 at a position facing the outside, and projects a projection image 3 onto a detection target surface 2. The projector 30 includes a first infrared light irradiation unit 12, a second infrared light irradiation unit 13, and an imaging unit 15 at a position facing the outside.

In this embodiment, the detection target surface 2 is set as a top of a desk. However, the detection target surface 2 may be a flat body, such as a wall surface, a ceiling surface, a floor surface, a projection screen, a blackboard, or a whiteboard, a curved body, such as a spherical shape, or a mobile object, such as a belt conveyer. The detection target surface 2 is not limited to the surface onto which the projection image 3 is projected, and may be a flat panel, such as a liquid crystal display.

As shown in FIG. 2, the projector 30 includes an input device 20, a projection unit 31, a projection image generation unit 32, and an image signal input unit 33.

The input device 20 includes the detection device 10 and a system control unit 21.

The projection unit 31 includes a light source, a liquid crystal panel, a lens, a control circuit of the light source, the lens, and the liquid crystal panel, and the like. The projection unit 31 enlarges an image input from the projection image generation unit 32 and projects the image onto the detection target surface 2 to generate the projection image 3.

The projection image generation unit 32 generates an image to be output to the projection unit 31 on the basis of an image input from the image signal input unit 33 and control information (or image information) input from the system control unit 21 in the input device 20. The image input from the image signal input unit 33 is a still image or a motion image, The control information (or image information) input from the system control unit 21 is information which indicates to change the projection image 3 on the basis of the details of an indication operation by the user. Here, the details of the indication operation by the user are detected by the detection device 10.

The system control unit 21 generates control information to be output to the projection image generation unit 32 on the basis of the details of the indication operation by the user detected by the detection device 10. The system control unit 21 controls the operation of the object extraction unit 17 and/or the indication point extraction unit 18 arranged inside of the detection device 10. The system control unit 21 receives an extraction result from the object extraction unit 17 and/or the indication point extraction unit 18. The system control unit 21 includes a central processing unit (CPU), a main storage device, an auxiliary storage device, other peripheral devices, and the like, and can be constituted as a device which executes a predetermined program to realize various functions. The system control unit 21 may be constituted to include a part of the configuration in the detection device 10 (that is, the system control unit 21 and the detection device 10 are unified).

The detection device 10 includes an infrared light irradiation unit 11, an infrared light control unit 14, the imaging unit 15, a frame image acquisition unit 16, the object extraction unit 17, and the indication point extraction unit 18. In the configuration of the detection device 10, the object extraction unit 17 and the indication point extraction unit 18 correspond to a detection unit 19.

The infrared light irradiation unit 11 includes the first infrared light irradiation unit 12 and the second infrared light irradiation unit 13. The infrared light control unit 14 controls a turn-on time and a turn-off time of infrared rays of the first infrared light irradiation unit 12 and the second infrared light irradiation unit 13 to perform blinking control of first infrared light and second infrared light, and also controls the intensities of the first infrared light and the second infrared light. The infrared light control unit 14 performs control such that the blinking control of the first infrared light and the second infrared light is synchronized with a synchronization signal supplied from the frame image acquisition unit 16.

The imaging unit 15 includes an imaging element which is composed of a charge-coupled device (CCD) and the like, a lens, an infrared transmitting filter, and the like. The imaging unit 15 images a wavelength region of incident infrared light, which has transmitted through the infrared transmitting filter, with the imaging element, that is, the imaging unit 15 images a reflected light of the first infrared light and the second infrared light to image a motion of the hand or finger of the user on the detection target surface 2 in the form of a motion image (or continuous still images). The imaging unit 15 outputs a vertical synchronization signal (vsync) of motion image capturing and an image signal for each frame to the frame image acquisition unit 16. The frame image acquisition unit 16 sequentially acquires the image signal for each frame imaged by the imaging unit 15 and the vertical synchronization signal from the imaging unit 15. The frame image acquisition unit 16 generates a predetermined synchronization signal on the basis of the acquired vertical synchronization signal and outputs the predetermined synchronization signal to the infrared light control unit 14.

The detection unit 19 detects an orientation of the hand (indication part) or the like on the basis of an image which is imaged by the imaging unit 15 by irradiating the first infrared light and the second infrared light. The indication point extraction unit 18 detects the position of the finger (tip part) on the detection target surface 2 on the basis of an image region of a tip part extracted on the basis of an image which is imaged by irradiating the first infrared light and the orientation of the hand (indication part) detected by the object extraction unit 17.

The object extraction unit 17 extracts the image region of the hand (indication part) and the image region of the tip part on the basis of an image imaged by the imaging unit 15 by irradiating the first infrared light and the second infrared light.

The indication point extraction unit 18 detects the orientation of the hand (indication part) or the like on the basis of the image region of the hand (indication part) and the image region of the tip part extracted by the object extraction unit 17. The indication point extraction unit 18 detects the position of the finger (tip part) on the detection target surface 2 on the basis of the image region of the tip part and the orientation of the hand (indication part).

The first infrared light irradiation unit 12 irradiates the first infrared light for detecting the tip part (that is, the finger or the tip part of a stylus) of the indication part (indication part = hand or stylus), such as the finger of the hand of the user or the tip part of the stylus of the user, on the detection target surface 2. The second infrared light irradiation unit 13 irradiates the second infrared light which is irradiated onto a region farther away from the detection target surface 2 than the first infrared light. As shown in FIG. 1, the emission portion of the first infrared light irradiation unit 12 and the emission portion of the second infrared light irradiation unit 13 are arranged in line in a vertical direction at the external front surface of the projector 30.

In an example shown in FIG. 1, the imaging unit 15, the projection unit 31, the emission portion of the first infrared light irradiation unit 12, and the emission portion of the second infrared light irradiation unit 13 are arranged linearly in the vertical direction at the external front surface of the projector 30. Hereinafter, a case where the "indication part" is a "hand" of the user and the "tip part" of the indication part is a "finger" of the user will be described as an example.

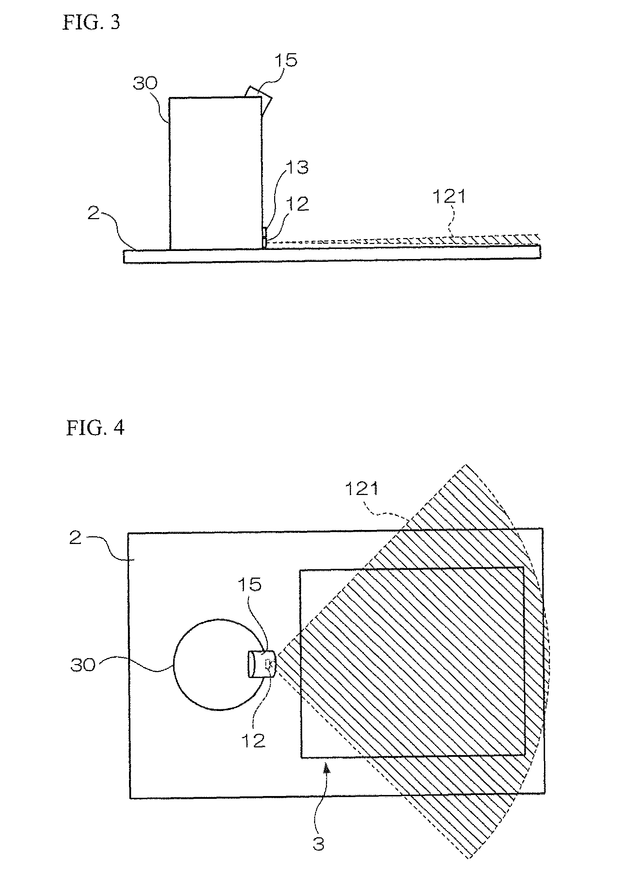

The first infrared light is parallel light that is substantially parallel to the detection target surface 2 which is shown as an irradiation region 121 in FIG. 3 (a side view) and FIG. 4 (a plan view). The first infrared light irradiation unit 12 includes, for example, an infrared light-emitting diode (LED), a galvanic scanner, an aspheric reflecting mirror, and the like. As shown in FIG. 3, the first infrared light irradiation unit 12 is configured such that it generates a light flux in which an irradiation region 121 thereof in a vertical direction with respect to the detection target surface 2 has a height close to (the front surface of) the detection target surface 2 as possible, the light flux has as a small irradiation width as possible, and the light flux is parallel to the detection target surface 2 as possible.

As shown in FIG. 4, the irradiation region 121 in a planar direction has a fan shape and is adjusted so as to cover a great portion of the projection image 3. The first infrared light is used to detect the tip part of the finger being in contact with the detection target surface 2. For example, the first infrared light irradiation unit 12 may have a configuration such that a plurality of parallel infrared LEDs having comparatively narrow directivity on a plane are arranged in different directions on the same plane so as to have wide directivity on the plane as shown in FIG. 4.

The second infrared light is used so as to detect the entire hand (or most of the hand) of the user. Accordingly, the irradiation region in the vertical direction of the second infrared light can be set as an irradiation region which has a larger width in the vertical direction than the irradiation region 121 shown in FIG. 3. That is, the second infrared light can be set as, having a sufficient large irradiation width with respect to the detection target surface 2to irradiate the entire hand of the user and having a light flux to be as parallel as possible with respect to the detection target surface 2.

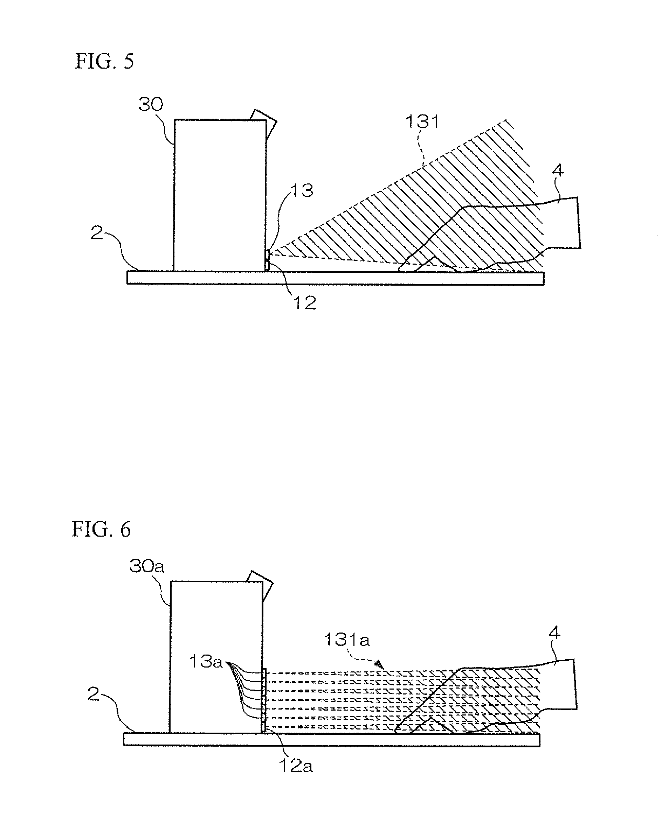

However, in order to obtain parallel light having large width, an optical system may be increased in size or may become complicated. Accordingly, in order to simplify a configuration, for example, as shown as an irradiation region 131 in FIG. 5 (a side view), diffusion light which diffuses upward in the vertical direction with respect to the detection target surface 2 can be considered. In this case, it is preferable that the irradiation region 131 of the second infrared light is set so as to have a light flux in which the downward diffusion of the light flux is minimized in the vertical direction with respect to the detection target surface 2. This is because, by weaken light directed downward, it is possible to suppress reflection of infrared light from the detection target surface 2. Therefore, it is possible to suppress reflection except from the hand (that is, an indication part) and the sensitivity of object detection at the time of object extraction, which is described below, can be improved.

For example, the second infrared light irradiation unit 13 may be constituted by a single infrared LED or may be constituted using an infrared LED, a galvanic scanner or an aspheric reflecting mirror, and the like. Similarly to the irradiation region 121 in the planar direction of the first infrared light shown in FIG. 4, the irradiation region in the planar direction of the second infrared light has a fan shape and is adjusted so as to cover a great portion of the projection image 3.

The second infrared light irradiation unit 13 and the second infrared light may be configured as shown in FIG. 6 additionally to the configurations of the installation position or the irradiation width as shown in FIG. 1 or 5.

A configuration shown in FIG. 6 is a configuration in which a plurality of second infrared light irradiation units 13a having the same configuration as the first infrared light irradiation unit 12 shown in FIG. 3 are provided, instead of the second infrared light irradiation unit 13 shown in FIG. 5.

In a projector 30a (corresponding to the projector 30) shown in FIG. 6, a first infrared light irradiation unit 12a having the same configuration as the first infrared light irradiation unit 12 shown in FIG. 3 and a plurality of second infrared light irradiation units 13a are arranged in line in the vertical direction. In this case, the first infrared light irradiation unit 12a is used so as to irradiate the first infrared light, and is also used so as to irradiate the second infrared light along with a plurality of second infrared light irradiation units 13a. That is, in the projector 30a shown in FIG. 6, an irradiation region 131 a having a large irradiation width in the vertical direction is generated using the first infrared light irradiation unit 12a and a plurality of second infrared light irradiation units 13a.

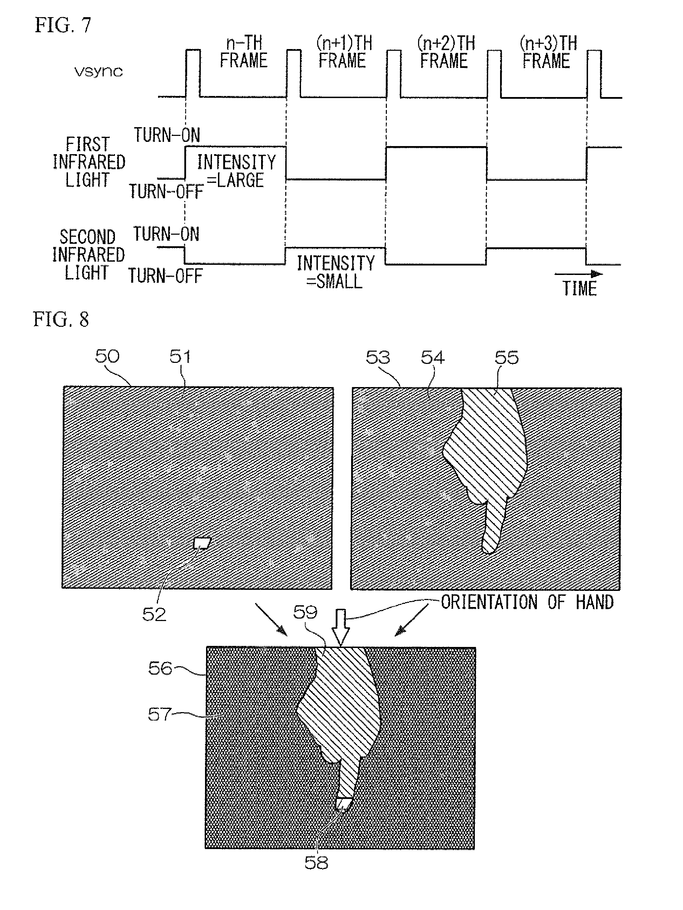

Next, the operation of the detection device 10 will be described referring to FIGS. 7 to 9B.

First, control of the irradiation timing of the first infrared light and the second infrared light by the infrared light control unit 14 will be described referring to FIG. 7. FIG. 7 is a timing chart showing the relationship in terms of change over time (and the relationship in terms of intensity of infrared light) between the vertical synchronization signal (vsync) output from the imaging unit 15, the turn-on and turn-off of the first infrared light, and the turn-on and turn-off of the second infrared light.

FIG. 7 shows an operation from an n-th frame to an (n+3)th frame (where n is a natural number) of a motion image by the imaging unit 15. As shown in FIG. 7, the irradiation timing of the first and second infrared light is switched in according to the frame switching timing of the imaging unit 15.

For example, the infrared light control unit 14 performs control such that the irradiation of infrared light is switched in time series in according to the frame timing, that is, irradiation of the first infrared light in the n-th frame, irradiation of the second infrared light in the (n+1)th frame, irradiation of the first infrared light in the (n+2)th frame, .... In this embodiment, as shown in FIG. 7, the infrared light control unit 14 performs control such that the intensity of the first infrared light becomes larger than the intensity of the second infrared light.

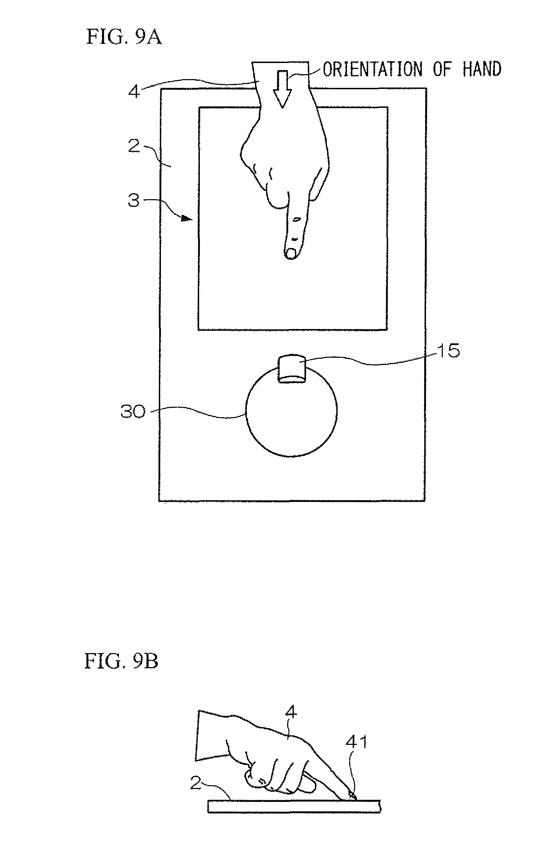

FIG. 8 shows an image 50 of an example of an image (first image) of an n-th frame (at the time of first infrared light irradiation) and an image 53 of an example of an image (second image) of an (n+1)th frame (at the time of second infrared light irradiation) in FIG. 7. The images 50 and 53 in FIG. 8 show a captured image when a hand 4 with a grip shown in FIGS. 9A and 9B is placed on the detection target surface 2.
FIG. 9A is a plan view, and FIG. 9B is a side view. In this example, as shown in FIG. 9B, the hand 4 comes into contact with the detection target surface 2 with a tip 41 of a forefinger, and other fingers are not in contact with the detection target surface 2. In the image 50 in FIG. 8, a portion of the tip 41 of the forefinger in FIGS. 9A and 9B is a high luminance region (that is, a region having a large pixel value: a reflection region of the first infrared light) 52, and the other portion is a low luminance region (that is, a region having a small pixel value) 51. Conversely, in the image 53 in FIG. 8, the entire hand 4 in FIGS. 9A and 9B is an intermediate luminance region (that is, a region having an intermediate pixel value: a reflection region of the second infrared light) 55, and the other portion is a low luminance region 54.

The frame image acquisition unit 16 in FIG. 2 acquires an image in terms of frames from the imaging unit 15. The acquired image is output to the object extraction unit 17. In this example, an example where the frame image acquisition unit 16 outputs the image 50 and the image 53 shown in FIGS. 9A and 9B to the object extraction unit 17 will be described.

When image data for two frames is received from the frame image acquisition unit 16, the object extraction unit 17 calculates the difference in the pixel value between corresponding pixels for the n-th frame image 50 and the (n+1)th frame image 53 so as to extract the imaging regions of the indication part and the tip part of the indication part which are included in the image. That is, the object extraction unit 17 performs processing (that is, differential processing) for subtracting the small pixel value from the large pixel value for the pixels at the same position in the imaging element of the imaging unit 15 for the n-th frame image 50 and the (n+1)th frame image 53.

An example of an image obtained as the result of the processing for calculating the difference is shown as an image 56 in FIG. 8. In the example shown in FIG. 8, a low luminance region 57, an intermediate luminance region 59, and a high luminance region 58 are included in the image 56. The intermediate luminance region 59 corresponds to the intermediate luminance region 55 (that is, the entire hand 4) of the image 53, and the high luminance region 58 corresponds to the high luminance region 52 (that is, the tip 41 of the forefinger) of the image 50.

In this way, as shown in FIG. 7, the infrared light control unit 14 switches the irradiation timing of infrared light in according to the vertical synchronization signal (vsync) of the imaging element so as to change the infrared light irradiation state between the frames. Here, when the first infrared light is ON (turned on), the second infrared light is OFF (turned off), and when the first infrared light is OFF, the second infrared light is ON.

In the frame acquisition image imaged by the imaging unit 15, an object in the periphery of the hand 4 appears by sunlight or infrared light emitted in an indoor illumination environment. The intensity of the second infrared light is lowered compared to the first infrared light, whereby the irradiation of the first infrared light and the display state of the hand 4 are distinguished. For this reason, the object extraction unit 17 obtains the difference between the frame images at the time of the irradiation of the first infrared light and the irradiation of the second infrared light, making it possible to extract only the hand 4.

In the example of FIG. 8, the pixel value of the region 59 of the hand and the pixel value of the region 58 of the tip part of the finger included in the difference image 56 are different from each other. Accordingly, the difference image 50 is multi-valued for each range of a predetermined pixel value so as to extract the region 59 of the hand and the region 58 of the fingertip. That is, the object extraction unit 17 is capable of extracting the region 59 of the hand and the region 58 of the fingertip by the difference image calculation processing and the multi-valued processing.

Next, the indication point extraction unit 18 extracts the tip part region (that is, an indication point) of the finger which is estimated that it has been used for an indication operation, from the region 59 of the hand and the tip part region 58 of the finger extracted by the object extraction unit 17. In the example shown in FIG. 8, the tip part region 58 (that is, a reflection region of the first infrared light) of the finger is a single location, and therefore this region is extracted as a region where an indication operation is performed.

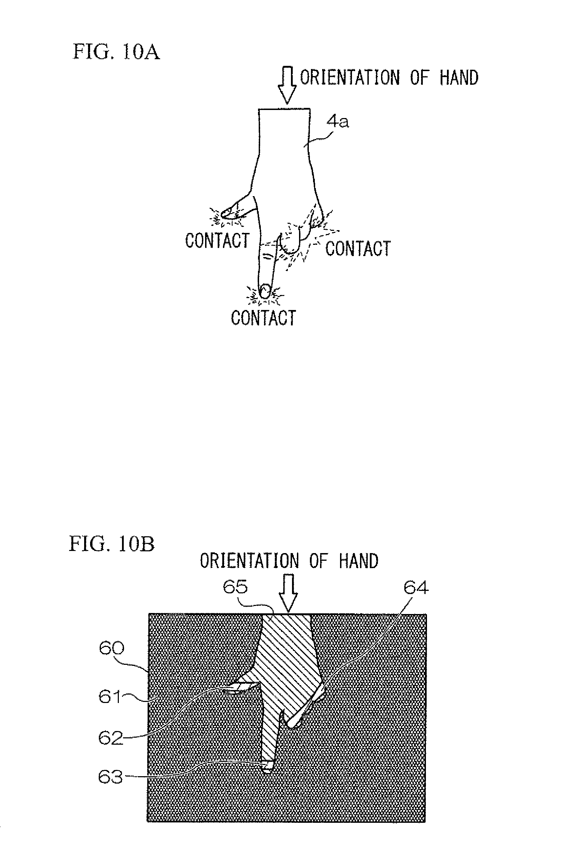

Here, the extraction processing of the indication point extraction unit 18 when there are a plurality of reflection regions of the first infrared light will be described with reference to FIGS. 10A and 10B.

In the example shown in FIGS. 10A and 10B, as shown in FIG. 10A, it is set that a hand 4a is placed on the detection target surface 2 with the orientation (that is, the orientation entering from the front surface of the device (= the projector 30)) of the hand indicated by an arrow, and all fingers are in contact with the detection target surface 2. In this case, the object extraction unit 17 calculates a difference image 60 shown in FIG. 10B. The difference image 60 includes a low luminance region 61, high luminance regions 62 to 64, and an intermediate luminance region 65.

When the difference image 60 is received from the object extraction unit 17, since a plurality of high luminance regions (that is, the reflection regions of the first infrared light) are included, the indication point extraction unit 18 performs predetermined image processing to perform the processing to detect the orientation of the hand (indication part) 4a.

As the predetermined image processing, the following processing may be used. That is, as one method, there is pattern matching by comparison between the pattern of the intermediate luminance region (the image region of the indication part) and a predefined reference pattern. As another method, there is a method in which detecting a position where the boundary of a detection range, designated in advance within the imaging range of the imaging unit 15, overlaps the intermediate luminance region (the image region of the indication part) so as to obtain the direction of the arm side of the hand (the base side). As still another method, there is a method in which the extension direction of the hand is calculated on the basis of the motion vector of the intermediate luminance region (the image region of the indication part) previously extracted. The orientation of the indication part may be detected by these methods alone or in combination.

In this case, it is set that the orientation of the hand indicated by an arrow in FIG. 10B is detected by the indication point extraction unit 18. The indication point extraction unit 18 extracts the position of the tip part (referred to as an indication point) of the hand (indication part) on the basis of the orientation of the hand and the position of the high luminance region (that is, the reflection region of the first infrared light). For example, when the hand enters from the front surface of the device, of the reflection region of the first infrared light, the lowermost region is set as an indication point. For example, when the hand enters from the left surface of the device, the rightmost region is set as an indication point.

In the example shown in FIGS. 10A and 10B, since the indication point extraction unit 18 recognizes that the hand 4a enters from the front surface of the device, of the reflection region of the first infrared light, the lowermost region, that is, a high luminance region 63 is decided as an indication point. The indication point extraction unit 18 outputs positional information of the high luminance region 63 to the system control unit 21.

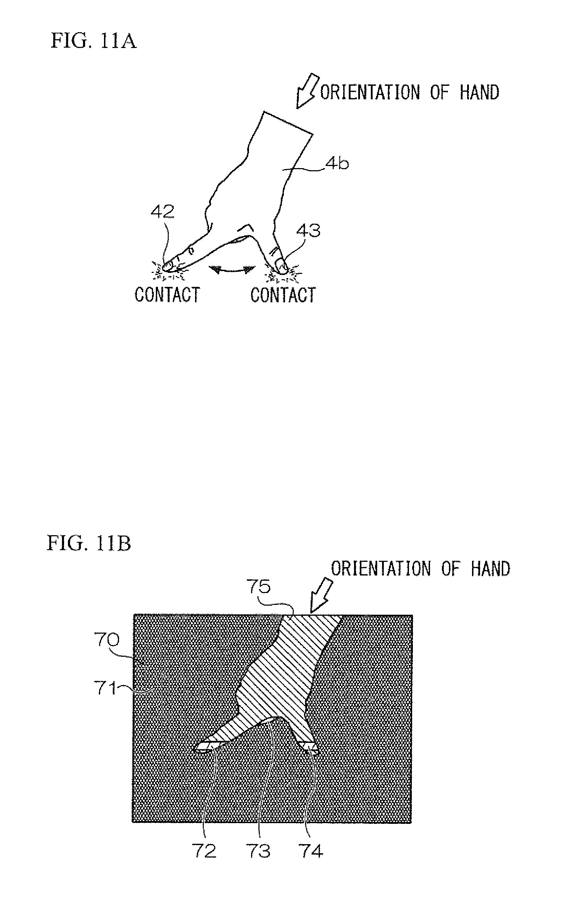

Next, another example of the extraction processing of the indication point extraction unit 18 when there are a plurality of reflection regions of the first infrared light will be described referring to FIGS. 11A and 11B. In the example shown in FIGS. 11A and 11B, as shown in FIG. 11A, it is set that a hand 4b is placed on the detection target surface 2 with the orientation (that is, the direction from the upper right side with respect to the device in FIG. 9A) of the hand indicated by an arrow, and a forefinger 42 and a thumb 43 are in contact with the detection target surface 2. In this case, the object extraction unit 17 calculates a difference image 70 shown in FIG. 11B.

The difference image 70 includes a low luminance region 71, high luminance regions 72 to 74, and an intermediate luminance region 75. When the image 70 is received from the object extraction unit 17, since a plurality of high luminance regions (that is, the reflection regions of the first infrared light) are included, the indication point extraction unit 18 performs the above-described image processing to perform processing for detecting the orientation of the hand (indication part) 4b.

In this case, it is set that the orientation of the hand indicated by an arrow in FIG. 11B is detected by the indication point extraction unit 18. That is, in the example shown in FIGS. 11A and 11B, since the indication point extraction unit 18 recognizes that the hand 4b enters the device slightly obliquely, of the reflection region of the first infrared light, the region (that is, the high luminance region 72) of the tip part of the orientation of the hand is decided as an indication point. The indication point extraction unit 18 outputs positional information of the high luminance region 72 to the system control unit 21.

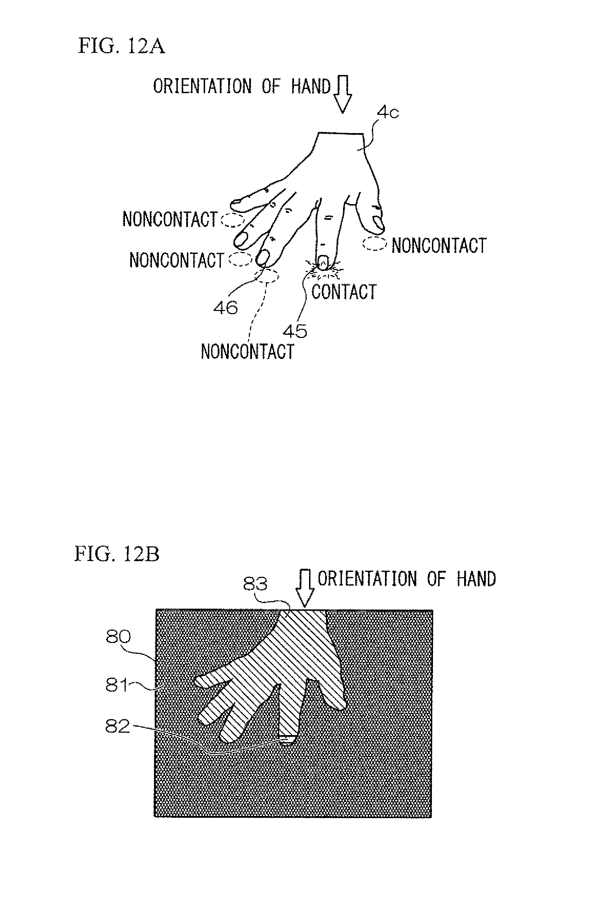

In the example shown in FIGS. 12A and 12B, as shown in FIG. 12A, it is set that a hand 4c is placed on the detection target surface 2 with the orientation of the hand indicated by an arrow, and a forefinger 45 is in contact with the detection target surface 2. In this case, the object extraction unit 17 calculates a difference image 80 shown in FIG. 12B. The difference image 80 includes a low luminance region 81, a high luminance region 82, and an intermediate luminance region 83. When the image 80 is received from the object extraction unit 17, since the high luminance region (that is, the reflection region of the first infrared light) is a single location, the indication point extraction unit 18 decides the high luminance region 82 as an indication point. The indication point extraction unit 18 outputs positional information of the high luminance region 82 to the system control unit 21.

In this example, as shown in FIG. 12A, the tip of the forefinger 45 and the tip of a middle finger 46 are located at the position of the tip part of the orientation of the hand. However, the forefinger 45 is in contact with the detection target surface 2, and the middle finger 46 is not in contact with the detection target surface 2. In this case, if image capturing is not performed using the first infrared light, it is difficult to determine a region which is set as an indication point. However, in this embodiment, the first infrared light is used, and thus the contacted finger is represented as a high luminance region, making it easy to perform determination.

In the indication point extraction unit 18 in FIG. 2, processing to calculate a motion vector on the basis of positional information of the indication point previously extracted may be performed, instead of extracting the position of the indication point. In this case, for example, as indicated by a solid-line arrow in FIG. 11A, when it is detected that the forefinger 42 and the thumb 43 are moved so as to be closed or opened, information indicating such fact is output to the system control unit 21. In this case, positional information of all high luminance regions for a given previous period may be stored in the indication point extraction unit 18 (or in the other storage device) along with the motion vectors. With this, it is possible to detect the motion of the hand (indication part). In detecting the motion of the indication point, a pattern recognition method or the like may be used.

The detection device 10 in this embodiment is capable of detecting the positions of a plurality of tip parts.

For example, as shown in FIG. 11B, the indication point extraction unit 18 detects the high luminance region 72 and the high luminance region 74, which are the tip part close to the orientation of the hand indicated by the arrow, as the position of the tip part from the orientation of the hand indicated by the arrow and the high luminance regions 72 to 74 (the regions 72 to 74 of the fingertips).

In FIGS. 12A and 12B, for example, the indication point extraction unit 18 detects the positions of a plurality of tip parts on the basis of the orientation of the hand and high luminance regions. In this case, all high luminance regions close to the orientation of the hand are detected as the positions of the tip parts. Although in this example, as shown in FIG. 12B, a high luminance region 82 is set as the position of the tip part, when a middle finger 46 and a forefinger 45 in FIG. 12A are in contact with the detection target surface 2, two high luminance regions are extracted by the object extraction unit 17. The indication point extraction unit 18 detects the high luminance regions corresponding to the middle finger 46 and the forefinger 45, which are the tip part close to the orientation of the hand, as the position of the tip part.

In FIGS. 11A and 11B and FIGS. 12A and 12B, the indication point extraction unit 18 may extract the shape of the hand (indication part) using a pattern recognition method or the like on the intermediate luminance region 75 (or 83), and may determine whether a plurality of tip parts are detected on the basis of the shape of the hand (indication part). For example, the indication point extraction unit 18 determines that, by using a pattern recognition method or the like on the intermediate luminance region 83, the shape of the hand shown in FIGS. 12A and 12B is a shape when a keyboard is pushed down, and detects the positions of a plurality of tip parts. Accordingly, the detection device 10 in this embodiment is capable of corresponding to the detection of a plurality of fingers in the keyboard.

The indication point extraction unit 18 may determine whether or not a plurality of tip parts are detected on the basis of the details of the projection image 3 to be projected from the projection unit 31 on the detection target surface 2 and the orientation of the hand. For example, when a keyboard is projected as the projection image 3, and the orientation of the hand is the orientation in which the keyboard is pushed down, the indication point extraction unit 18 may detect the positions of a plurality of tip parts. The indication point extraction unit 18 may detect the motion of the hand (indication part) so as to determine whether or not a plurality of tip parts is detected.

In the example described referring to FIG. 7, a case where the intensity of the first infrared light and the intensity of the second infrared light are different from each other has been described. This is to make the pixel value (luminance) of reflected light by the first infrared light and the pixel value (luminance) of reflected light by the second infrared light different from each other in the imaging unit 15. Accordingly, the following method may be introduced, instead of making the intensities different from each other. That is, for example, the wavelength of the first infrared light and the wavelength of the second infrared light may be made different from each other such that, according to the frequency characteristic of the imaging element constituting the imaging unit 15, the pixel value by the first infrared light comparatively increases and the pixel value by the second infrared light comparatively decreases. In order to obtain the same effects, in addition to making the wavelength of the first infrared light and the wavelength of the second infrared light different from each other, the characteristic of the infrared transmitting filter constituting the imaging unit 15 may be changed.

As described above, in the detection device 10 of this embodiment, the imaging unit 15 images the wavelength region of infrared light, and the infrared light irradiation unit 11 (irradiation unit) irradiates the first infrared light for detecting the tip part of the indication part on the detection target surface 2 and the second infrared light to be irradiated onto a region farther away from the detection target surface 2 than the first infrared light. The detection unit 19 detects the orientation of the indication part on the basis of an image imaged by the imaging unit 15 by irradiating the first infrared light and the second infrared light. The detection unit 19 detects the position of the tip part on the detection target surface 2 on the basis of the image region of the tip part extracted on the basis of an image imaged by irradiating the first infrared light and the detected orientation of the indication part.

Accordingly, the orientation of the indication part is detected using the first infrared light and the second infrared light having different irradiation regions, and the position of the tip part on the detection target surface 2 is detected on the basis of the image region of the tip part extracted on the basis of an image imaged by irradiating the first infrared light and the detected orientation of the indication part. That is, since the detection device 10 of this embodiment is configured so as to detect the orientation of the hand, it is possible to reduce erroneous detection of the indication when there are is plurality of tip parts or due to the difference in the orientation of the hand. Since the detection device 10 of this embodiment uses infrared light and is capable of detecting the hand without being affected by the complexion of a person, it is possible to reduce erroneous detection of the indication.

Of the first infrared light and the second infrared light having different irradiation regions, the first infrared light is provided so as to detect the tip part of the indication part on the detection target surface 2. For this reason, the detection device 10 of this embodiment is capable of improving detection accuracy of the position or the motion of the tip part.

In this embodiment, the first infrared light and the second infrared light are parallel light which is parallel to the detection target surface 2. In this case, since infrared light which is parallel to the detection target surface 2 is used, it is possible to detect the tip part of the indication part or the motion of the indication part with high accuracy. Accordingly, the detection device 10 of this embodiment is capable of reducing erroneous detection of the indication by the user and is capable of improving detection accuracy.

In this embodiment, the first infrared light is parallel light which is parallel to the detection target surface 2, and the second infrared light is diffusion light which is diffused in a direction perpendicular to the detection target surface 2. In this case, since diffusion light is used for the second infrared light, it is possible to perform detection in a wide range. For this reason, the detection device 10 of this embodiment is capable of reducing erroneous detection of the indication by the user and is capable of improving detection accuracy. Since the second infrared light is not necessarily parallel light, the configuration of the second infrared light irradiation unit 13 can be simplified.

In this embodiment, the infrared light irradiation unit 11 irradiates the first infrared light and the second infrared light in a switching manner in accordance with the imaging timing of the imaging unit 15. The detection unit 19 detects the orientation of the indication part on the basis of the first image (image 50) imaged by irradiating the first infrared light and the second image (image 53) imaged by the imaging unit 15 by irradiating the second infrared light.

Accordingly, it is possible to easily acquire the first image (image 50) and the second image (image 53).

In this embodiment, the infrared light irradiation unit 11 irradiates the first infrared light and the second infrared light with different light intensities. The detection unit 19 (object extraction unit 17) extracts the image region of the indication part (the region 59 of the hand) and the image region of the tip part (the region 58 of the fingertip) on the basis of the difference image between the first image (image 50) and the second image (image 53) imaged by irradiation with different light intensities, detects the orientation of the indication part on the basis of the extracted image region of the indication part, and detects the position of the tip part on the basis of the detected orientation of the indication part and the image region of the tip part.

Accordingly, the detection unit 19 (object extraction unit 17) generates the difference image between the first image (image 50) and the second image (image 53), and thereby it is possible of easily extracting the image region of the indication part (the region 59 of the hand) and the image region of the tip part (the region 58 of the tip part). In the first image (image 50) and the second image (image 53), although sunlight or infrared light emitted in an indoor illumination environment appears, the detection unit 19 (object extraction unit 17) generates the difference image, and thereby it is possible of excluding the appearance. Therefore, the detection device 10 of this embodiment is capable of reducing erroneous detection of the indication by the user and is capable of improving detection accuracy.

In this embodiment, the detection unit 19 (object extraction unit 17) multi-values the difference image and extracts the image region of the indication part (the region 59 of the hand) and the image region of the tip part (the region 58 of the fingertip) on the basis of the multi-valued difference image.

Accordingly, since extraction is made on the basis of the multi-valued difference image, the detection unit 19 (object extraction unit 17) is capable of easily extracting the image region of the indication part (the region 59 of the hand) and the image region of the tip part (the region 58 of the fingertip).

In this embodiment, the detection unit 19 (indication point extraction unit 18) detects the orientation of the indication part by either or a combination of pattern matching by comparison between the pattern of the image region (the region 59 of the hand) of the indication part and a predetermined reference pattern, the position where the boundary of the detection range designated in advance within the imaging range of the imaging unit 15 overlaps the image region of the indication part (the region 59 of the hand) and the motion vector of the image region of the indication part (the region 59 of the hand).

Therefore, the detection unit 19 (indication point extraction unit 18) is capable of detecting the orientation of the indication part with ease and high detection accuracy. For this reason, the detection device 10 of this embodiment is capable of reducing erroneous detection of the indication by the user and is capable of improving detection accuracy.

In this embodiment, the detection unit 19 (indication point extraction unit 18) detects the positions of a plurality of tip parts on the basis of the orientation of the indication part and the image region of the tip part (for example, the regions 72 and 74 of the fingertips).

Therefore, the detection device 10 of this embodiment is capable of being applied for the purpose of detecting a plurality of positions. For example, the detection device 10 of this embodiment is capable of being applied to a keyboard in which a plurality of fingers are used or motion detection for detecting the motion of the hand.

### [Second Embodiment]

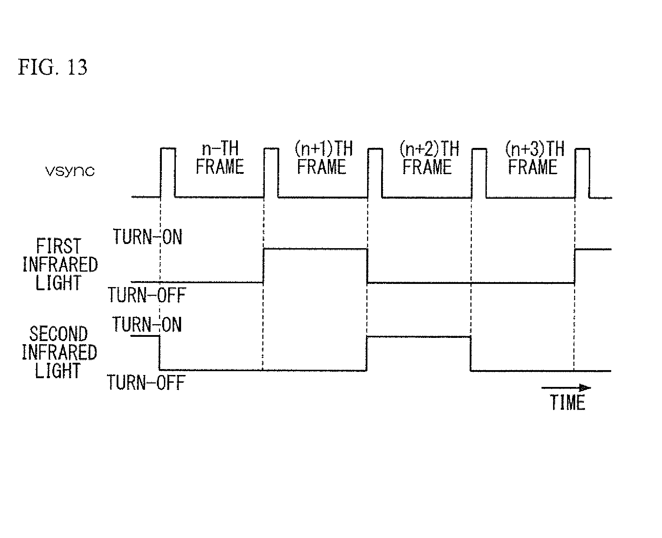

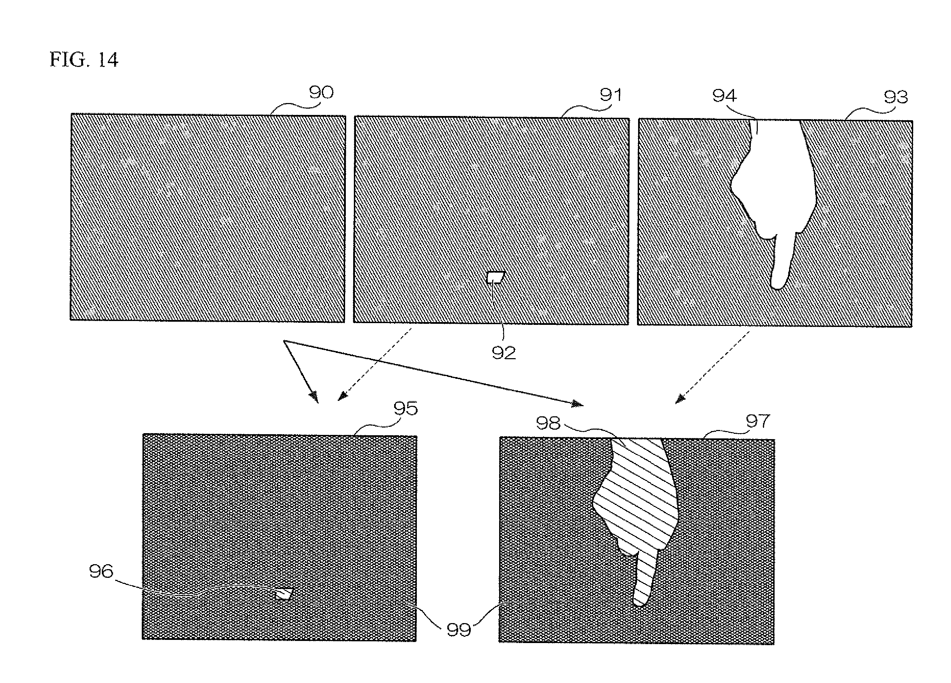

Next, another embodiment of the invention will be described referring to FIGS. 13 and 14.

Although in the first embodiment, an indication point is detected in terms of two frames, in this embodiment, as shown in the timing chart of FIG. 13, an indication point is detected in terms of three frames. However, in this embodiment, the intensity of the first infrared light and the intensity of the second infrared light is capable of be equal to each other. In this embodiment, in the block diagram in FIG. 2, a part of the internal processing of each unit is different.

In this embodiment, as shown in FIG. 13, a non-irradiation frame is added to both of the first infrared light and the second infrared light. For example, non-irradiation of infrared light in the n-th frame, irradiation of the first infrared light in the (n+1)th frame, irradiation of the second infrared light in the (n+2)th frame, ... are made. A difference image is extracted from images acquired at the time of irradiation of the first infrared light and the second infrared light in reference to a frame image at the time of non-irradiation so as to calculate the orientation of the hand and the indication point. The details of the object extraction processing and the indication point extraction processing will be specifically described with reference to FIG. 14.

FIG. 14 is a diagram showing an example of an acquired image 90 (third image) of the n-th frame (at the time of non-irradiation of infrared light), an acquired image 91 (first image) of the (n+1)th frame (at the time of irradiation of the first infrared light), and an acquired image 93 (second image) of the (n+2)th frame (at the time of irradiation of the second infrared light). The state of the indication part (hand) is as shown in FIGS. 9A and 9B. In this case, the image 91 includes a high luminance region 92 corresponding to the tip 41 of the forefinger in FIGS. 9A and 9B, and the image 93 includes a high luminance region 94 corresponding to the hand 4 in FIGS. 9A and 9B.

When the n-th frame image 90, the (n+1)th frame image 91, and the (n+2)th frame image 93 are received from the frame image acquisition unit 16, the object extraction unit 17 shown in FIG. 2 calculates the difference image between the (n+1)th frame image 91 and the n-th frame image 90 and the difference image between the (n+2)th frame image 93 and the n-th frame image 90. FIG. 14 shows the calculation results of the difference image 95 between the (n+1)th frame image 91 and the n-th frame image 90 and the difference image 97 between the (n+2)th frame image 93 and the n-th frame image 90. In this case, the effect by sunlight or infrared light emitted in an indoor illumination environment is excluded from a background image 99 of each of the images 95 and 97. As in the foregoing embodiment, the orientation of the hand can be detected on the basis of a high luminance region 96 (the image region of the tip part) included in the image 95 and a high luminance region 98 (the image region of the indication part) included in the image 97.

As described above, in the detection device 10 of this embodiment, the imaging unit 15 further images the third image (image 90) which is an image during a period in which both the first infrared light and the second infrared light are not irradiated. The detection unit 19 (object extraction unit 17) extracts the image region of the indication part and the image region of the tip part on the basis of the difference image between the first image (image 91) and the third image and the difference image between the second image (image 93) and the third image. The detection unit 19 (indication point extraction unit 18) detects the orientation of the indication part on the basis of the extracted image region of the indication part, and detects the position of the tip part on the basis of the detected orientation of the indication part and the image region of the tip part.

Therefore, as in the first embodiment, since the detection device 10 of this embodiment is configured so as to detect the orientation of the hand, it is possible to reduce erroneous detection of the indication when there is a plurality of tip parts or due to the difference in the orientation of the hand.

The detection unit 19 (object extraction unit 17) generates the difference image between the first image (image 91) and the third image and the difference image between the second image (image 93) and the third image, and thereby it is possible of easily extracting the image region of the indication part and the image region of the tip part. In the first image (image 91) and the second image (image 93), although sunlight or infrared light emitted in an indoor illumination environment appears, the detection unit 19 (object extraction unit 17) generates the difference image, and thereby it is possible of excluding the appearance. Therefore, the detection device 10 of this embodiment is capable of reducing erroneous detection of the indication by the user and is capable of improving detection accuracy.

The detection device 10 of this embodiment does not necessarily change the light intensities of the first infrared light and the second infrared light. For this reason, the configuration of the infrared light irradiation unit 11 is capable of be simplified.

According to the foregoing embodiment, the input device 20 includes the above-described detection device 10. Therefore, as in the detection device 10, the input device 20 is capable of reducing erroneous detection of the indication by the user and is capable of improving detection accuracy.

According to the foregoing embodiments, the projector 30 includes an input device 20 and a projection unit 31 which projects an image onto the detection target surface 2. Accordingly, as in the detection device 10, when detecting the position or the motion of the tip part, the projector 30 is capable of reducing erroneous detection of the indication by the user and is capable of improving detection accuracy.

### [Third Embodiment]

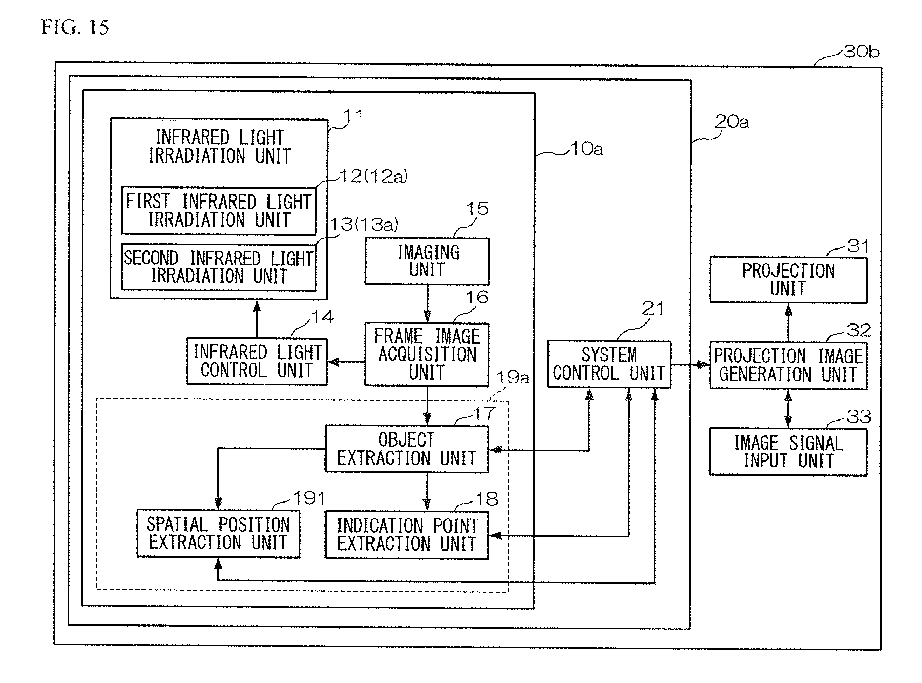

Next, still another embodiment of the invention will be described with reference to FIGS. 15 to 19.

FIG. 15 is a block diagram illustrating a detection device 10a as an another embodiment. In FIG. 15, the same (or corresponding) configurations as FIG. 2 are represented by the same reference symbols.

As shown in FIG. 15, the detection device 10a of this embodiment is different from the foregoing embodiments in that a spatial position extraction unit 191 is provided. The detection device 10a of this embodiment includes the spatial position extraction unit 191 and is capable of acquiring three-dimensional coordinates when the hand of the user is located in a space. In this embodiment, of the configuration of the detection device 10a, the object extraction unit 17, the indication point extraction unit 18, and the spatial position extraction unit 191 correspond to a detection unit 19a. A projector 30b (corresponding to the projector 30) includes an input device 20a (corresponding to the input device 20), and the input device 20a includes a detection device 10a (corresponding to the detection device 10).

The spatial position extraction unit 191 detects the position (three-dimensional coordinates) of the finger (tip part) in the space where the hand (indication part) moves within the imaging range of the imaging unit 15 on the basis of the second image imaged by the imaging unit 15 by irradiating the second infrared light.

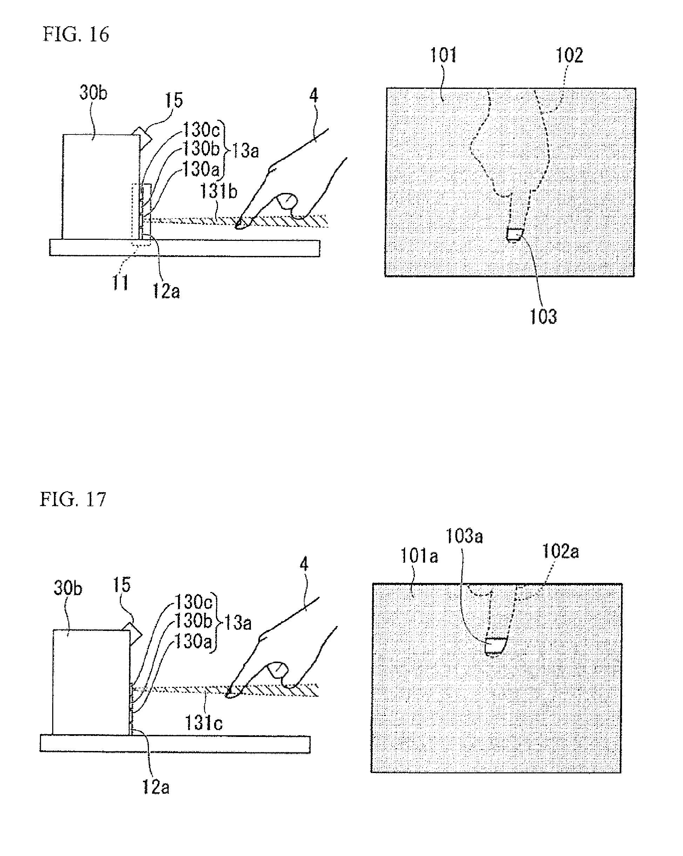

FIGS. 16 and 17 are diagrams showing an example of the operation of the detection device 10a of this embodiment when the infrared light irradiation unit 11 has the configuration such as shown in FIG. 6.

As shown in FIGS. 16 and 17, a second infrared light irradiation unit 13a includes a plurality of second infrared light irradiation units (130a, 130b, 130c). A plurality of second infrared light irradiation units (130a, 130b, 130c) irradiate different pieces of second infrared light at different heights. That is, a plurality of second infrared light irradiation units (130a, 130b, 130c) irradiate different pieces of second infrared light having different irradiation ranges in the vertical direction with respect to the detection target surface 2.

In this embodiment, the frame image acquisition unit 16 causes a plurality of second infrared light irradiation units (130a, 130b, 130c) to irradiate second infrared light sequentially at different timings through the infrared light control unit 14. The imaging unit 15 images the second image for each of a plurality of second infrared light irradiation units (130a, 130b, 130c). That is, the imaging unit 15 images a plurality of second images corresponding to a plurality of pieces of second infrared light.

The frame image acquisition unit 16 takes frame-synchronization such that the lowermost stage (second infrared light irradiation unit 130a) irradiates infrared light in the first frame, the second lowermost stage (second infrared light irradiation unit 130b) irradiates infrared light in the second frame,... to shift the irradiation timing of the second infrared light. The imaging unit 15 images the second image at this irradiation timing and outputs the imaged second image to the frame image acquisition unit 16.

The object extraction unit 17 extracts the image region of the hand (indication part) (in this case, the image region of the tip of the finger) on the basis of the second image acquired by the frame image acquisition unit 16. For example, the spatial position extraction unit 191 determines the irradiation timing, at which the tip of the finger is detected, on the basis of the image region of the tip of the finger extracted by the object extraction unit 17. The spatial position extraction unit 191 detects the position of the finger in the height direction (vertical direction) on the basis of the height of the second infrared light irradiation units (130a, 130b, 130c) corresponding to the irradiation timing at which the tip of the finger is detected. In this way, the spatial position extraction unit 191 detects the position of the tip part (the tip of the finger) in the vertical direction (height direction) on the basis of a plurality of second images.

The spatial position extraction unit 191 detects the position in the transverse direction and the depth direction on the basis of the second image imaged by the imaging unit 15. For example, the spatial position extraction unit 191 changes the scale (size) of the tip part (the tip of the finger) in accordance with the detected height position so as to extract an absolute position in a detection area (imaging range) in the transverse direction and the depth direction. That is, the spatial position extraction unit 191 detects the position of the tip part in the horizontal direction with respect to the detection target surface 2 on the basis of the extracted position and size of the image region of the indication part on the second image.

For example, FIG. 16 shows a case where the tip of the finger is located in the irradiation range of second infrared light 131b to be irradiated by the second infrared light irradiation unit 130a. In this case, the imaging unit 15 images an image 101 as the second image corresponding to the second infrared light 131b. In the image 101, a broken line 102 represents a region where the hand 4 is located, and a region 103 represents a portion (an image region 103 of the tip part) of the tip of the finger in which the second infrared light 131b is irradiated. The spatial position extraction unit 191 detects the height position corresponding to the irradiation position of the second infrared light 131b as the position of the tip part in the vertical direction on the basis of the image 101.

By using the fact that the width of the tip part of the finger in the hand of a person being substantially constant, the spatial position extraction unit 191 detects (extracts) the position of the tip part in the transverse direction and the depth direction (horizontal direction) on the basis of the position and width (size) of the image region 103 on the image 101. In this way, the spatial position extraction unit 191 detects the three-dimensional position in the space where the indication part (hand) moves.

For example, FIG. 17 shows a case where the tip of the finger is located in the irradiation range of second infrared light 131c to be radiated by the second infrared light irradiation unit 130c. In this case, the imaging unit 15 images an image 101a as the second image corresponding to the second infrared light 131c. In the image 101a, a broken line 102a represents a region where the hand 4 is located, and a region 103a represents a portion (an image region 103a of the tip part) of the tip of the finger in which the second infrared light 131c is irradiated. Similarly to the case shown in FIG. 16, the spatial position extraction unit 191 detects the three-dimensional position in the space where the indication part (hand) moves.

In FIG. 17, the hand 4 is located at a higher position than the case shown in FIG. 16. For this reason, the image region 103a is at an upper position of the image 101a compared to the image region 103, and the width (size) of the image region 103a is greater than the width (size) of the image region 103.

As describe above, the detection unit 19a of the detection device 10a of this embodiment detects the position of the tip part in the space where the indication part (hand) moves within the imaging range of the imaging unit 15 on the basis of the second image. Accordingly, since the detection device 10a is capable of detecting the position (three-dimensional position) of the tip part (the tip of the finger) in the space, for example, it is possible to perform user interface display according to the position of the finger.

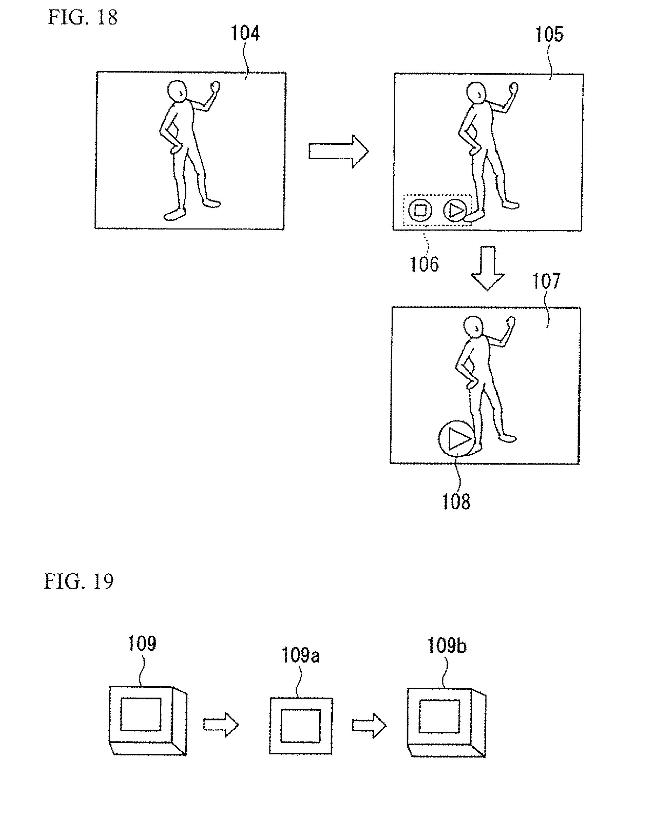

For example, as shown in FIG. 18, when the finger enters the detection range (the imaging range of the imaging unit 15), the projector 30b changes the display from a display screen 104 to a display screen 105, and displays a menu 106. When the finger becomes close to the detection target surface 2, as shown in a display image 107, the projector 30b displays an enlarged menu 108, and when the tip of the finger comes into contact with the detection target surface 2, determines that the menu is selected. The projector 30b executes predetermined processing corresponding to the selected menu.

For example, as shown in FIG. 19, when the finger becomes close to the detection target surface 2, the projector 30b changes the display from key display 109 to key display 109a, and when the tip of the finger comes into contact with the detection target surface 2, determines that the key display 109a is pushed down. When the tip of the finger is away from the detection target surface 2, the projector 30b changes the display from the key display 109a to key display 109b. In this way, the detection device 10a is capable of detect the push-down and push-up operations from the positional relationship of the finger. For this reason, the detection device 10a is capable of creating an environment close to an actual keyboard operation.

Therefore, the detection device 10a of this embodiment is capable of reducing erroneous detection of the indication by the user and is capable of performing the above-described user interface display, and thereby it is possible of improving user-friendliness.

Here, video content to be displayed may be on a server device connected to a network, and the projector 30b may control an input while performing communication with the server device through the network.

For example, the infrared light irradiation unit 11 sequentially irradiates a plurality of pieces of second infrared light having different irradiation ranges in the vertical direction with respect to the detection target surface 2, and the imaging unit 15 images a plurality of second images corresponding to a plurality of pieces of second infrared light. The detection unit 19a detects the position of the tip part in the vertical direction on the basis of a plurality of second images.

Therefore, the detection device 10a of this embodiment is capable of accurately detecting the position of the tip part in the vertical direction.

The detection unit 19a extracts the image region of the indication part on the basis of the second image and detects the position of the tip part in the horizontal direction with respect to the detection target surface 2 on the basis of the position and size of the extracted image region of the indication part on the second image.

Therefore, the detection device 10a of this embodiment is capable of detecting the position of the tip part in the horizontal direction by simple measures.

### [Fourth Embodiment]

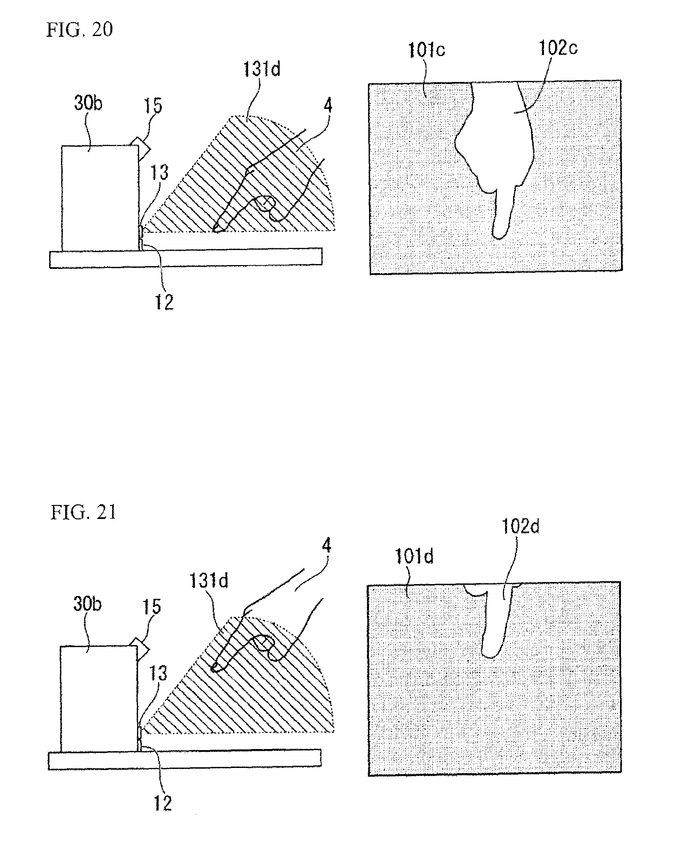

Next, yet another embodiment of the invention will be described with reference to FIGS. 20 and 21.

In this embodiment, a modification of the third embodiment in which the detection device 10a detects the three-dimensional coordinates when the hand of the user is located in the space will be described.

The internal configuration of a projector 30b of this embodiment is the same as in the third embodiment shown in FIG. 15.

In this embodiment, a case where the detection of the three-dimensional coordinates is applied to the infrared light irradiation unit 11 shown in FIG. 5 will be described.

In this case, the spatial position extraction unit 191 extracts the image region of the indication part on the basis of the second image, and detects the position of the tip part in the vertical direction on the basis of the position and size of the tip part in the extracted image region of the indication part on the second image.

FIGS. 20 and 21 are diagrams showing an example of the operation of the detection device 10a of this embodiment when the infrared light irradiation unit 11 has the configuration shown in FIG. 5.

As shown in FIGS. 20 and 21, the second infrared light irradiation unit 13 irradiates the second infrared light in a radial manner. For this reason, the object extraction unit 17 extracts the image region of the hand (indication part) (in this case, the image region of the entire hand) on the basis of the second image.

For example, FIG. 20 shows a case where the tip of the finger is located in a lower region of the irradiation range of second infrared light 131d to be irradiated by the second infrared light irradiation unit 13. In this case, the imaging unit 15 images an image 101c as the second image corresponding to the second infrared light 131d. In the image 101c, a region 102c represents the image region of the hand (the image region of the indication part) in which the second infrared light 131d is irradiated. The detection unit 19a detects the height position corresponding to the irradiation position of the second infrared light 131 d as the position of the tip part in the vertical direction on the basis of the image 101c.

Specifically, the object extraction unit 17 extracts the image region (region 102c) of the hand on the basis of the image 101c. By using the fact that the width of the tip of the finger in the hand of a person being substantially constant, the spatial position extraction unit 191 detects the position of the tip part in the vertical direction on the basis of the position and size of the tip part in the image region (region 102c) of the indication part extracted by the object extraction unit 17 on the second image.

Similarly, by using the fact that the width of the tip of the finger in the hand of a person being substantially constant, the spatial position extraction unit 191 detects (extracts) the position of the tip part in the transverse direction and the depth direction (horizontal direction) on the basis of the position and width (size) of the image region (region 102c) of the indication part on the image 101. In this way, the spatial position extraction unit 191 detects the three-dimensional position in the space where the indication part (hand) moves.

For example, FIG. 21 shows a case where the tip of the finger is located in an upper region of the irradiation range of the second infrared light 131d to be irradiated by the second infrared light irradiation unit 13. In this case, the imaging unit 15 images an image 101d as the second image corresponding to the second infrared light 131 d. In the image 101d, a region 102d represents the image region of the hand (the image region of the indication part) in which the second infrared light 131d is irradiated. Similarly to the case shown in FIG. 16, the spatial position extraction unit 191 detects the three-dimensional position in the space where the indication part (hand) moves.

In FIG. 21, the hand 4 is located at a higher position than the case shown in FIG. 20. For this reason, the image region 102d is at an upper position of the image 101d compared to the image region 102c, and the width (size) of the tip part (the tip of the finger) in the image region 102d is greater than the width (size) of the tip part (the tip of the finger) in the image region 102c.

As described above, the detection unit 19a of the detection device 10a of this embodiment detects the position of the tip part in the space where the indication part (hand) moves within the imaging range of the imaging unit 15 on the basis of the second image. Therefore, as in the third embodiment, the detection device 10a is capable of detecting the position (three-dimensional position) of the tip part (the tip of the finger) in the space. For this reason, for example, it becomes possible to perform user interface display according to the position of the finger.

According to this embodiment, the detection unit 19a extracts the image region of the indication part on the basis of the second image and detects the position of the tip part in the vertical direction on the basis of the position and size of the tip part in the extracted image region of the indication part on the second image.

Therefore, the detection device 10a of this embodiment is capable of detecting the position of the tip part in the vertical direction by simple measures.

### [Fifth Embodiment]

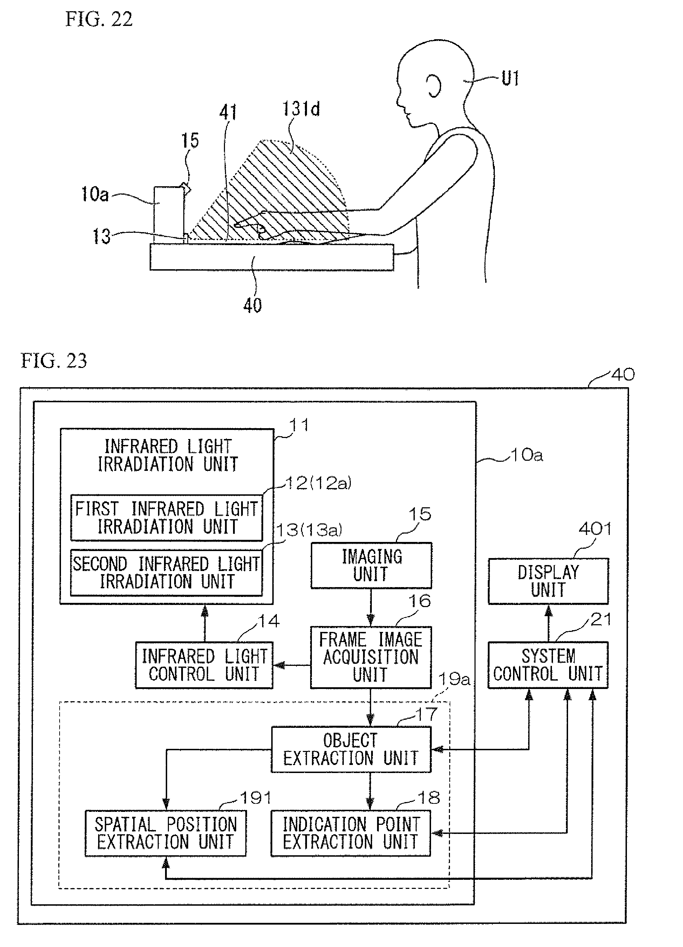

Next, yet another embodiment of the invention will be described with reference to FIGS. 22 and 23.

In this embodiment, an example of a case where the above-described detection device 10a is applied to a tablet terminal 40 will be described.

FIG. 22 is a schematic view showing an example where the detection device 10a is applied to the tablet terminal 40.

In FIG. 22, the tablet terminal 40 (electronic apparatus) includes the detection device 10a of the fourth embodiment as an example. The detection device 10a may be attached to the tablet terminal 40 as a single body or may be detachably attached to the tablet terminal 40.

FIG. 23 is a block diagram showing an example of the configuration of the tablet terminal 40.

In FIG. 23, the same configurations as those in FIG. 15 are represented by the same reference symbols.

The tablet terminal 40 includes a display unit 401, and the display unit 401 displays an image output from the system control unit 21.

As shown in FIG. 22, the detection device 10a is capable of detect the position (three-dimensional position) of the tip part of the finger of a user U 1 in a space on the basis of the second image imaged by the imaging unit 15 in accordance with the second infrared light 131d to be irradiated by the second infrared light irradiation unit 13. For this reason, the tablet terminal 40 exhibits the same effects as the detection device 10a. For example, the tablet terminal 40 is capable of reducing erroneous detection of the indication by the user and is capable of performing the above-described user interface display, and thereby it is possible of improving user-friendliness.

The invention is not limited to the foregoing embodiments, and may be changed within the scope without departing from the spirit of the invention.

For example, although in the foregoing embodiments, a form in which the single imaging unit 15 is provided has been described, a plurality of imaging units 15 may be provided and processing for eliminating occlusion may be added. A form in which the first infrared light and the second infrared light are generated by a single infrared light source using a filter or a galvanic scanner may be used.

Although in the foregoing embodiments, a form in which the detection device 10 and the input device 20 are applied to the projector 30 has been described, a form in which the detection device 10 and the input device 20 are applied to the other device may be used. For example, a form in which the detection device 10 and the input device 20 are applied to a display function-equipped electronic blackboard, an electronic conference device, or the like may be used. A form in which a plurality of detection devices 10 and input devices 20 may be used in combination or a form in which the detection device 10 and the input device 20 are used as a single device may be used.

The tablet terminal 40 is not limited to the fifth embodiment, and the following modifications may be made.

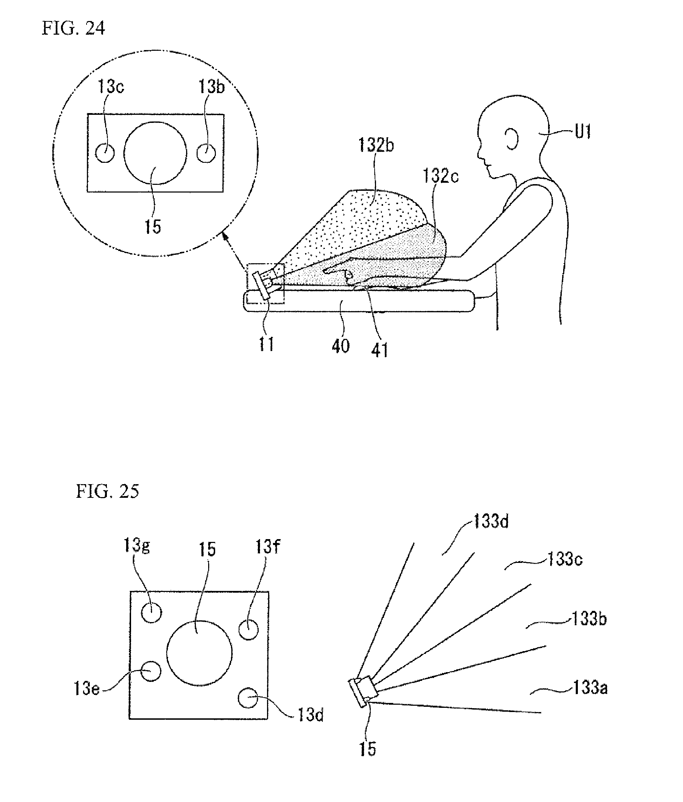

For example, as shown in FIG. 24, in the tablet terminal 40, a form in which the detection device 10a is mounted close to the display surface of the display unit 401 in a substantially flat manner may be used. In this case, the imaging unit 15 is arranged so as to be looked up diagonally from the display surface. A form of the imaging unit 15 may be a movable type and can be adjusted by the user U1 themself, or a form in which an angle of imaging can be changed depending on the tilt of the display unit 401 may be used. A form in which a plurality of second infrared light irradiation units (13b, 13c) which are arranged laterally to the imaging unit 15 are arranged with different tilts on the left and right side, and the irradiation timings differ in synchronization with the frame frequency of the imaging unit 15 may be used.

In the example shown in FIG. 24, second infrared light 132b irradiated by the second infrared light irradiation unit 13b is irradiated upward obliquely compared to second infrared light 132c irradiated by the second infrared light irradiation unit 13c. That is, in regard to the second infrared light 132b and the second infrared light 132c, the irradiation range is area-divided. In this case, the tablet terminal 40 area-divides the second infrared light 132b and the second infrared light 132c, limits the position of the tip part, and thereby it is possible of extracting the three-dimensional position with higher accuracy.

In FIG. 24, though the first infrared light irradiation unit 12 is not shown, as in the foregoing embodiments, the first infrared light irradiation unit 12 irradiates the first infrared light.

For example, as shown in FIG. 25, in the tablet terminal 40 (detection device 10a), a form in which a plurality of two or more second infrared light irradiation units (13d to 13g) are provided, and a plurality of pieces of second infrared light (133a to 133d) having different irradiation ranges (irradiation areas) are irradiated may be used. In this case, as described above, only the irradiation directions of infrared light of a plurality of second infrared light irradiation units (13d to 13g) may be changed so as to divide the irradiation areas, or the arrangement positions of the second infrared light irradiation units (13d to 13g) may be changed so as to divide the irradiation areas more finely.

In FIG. 25, though the first infrared light irradiation unit 12 is not shown, as in the foregoing embodiments, the first infrared light irradiation unit 12 irradiates the first infrared light.

When the tablet terminal 40 includes a touch panel, a form in which the detection device 10a and the touch panel are combined so as to detect an input by the indication part (hand) may be used. In this case, a form in which the tablet terminal 40 detects contact of the indication part (hand) with the detection target surface 2 by the touch panel, and in which no first infrared light is used may be used. By this form, the tablet terminal 40 becomes capable of performing detection even if the rotating and movable range of the imaging unit 15 is small. For example, generally a camera provided in a tablet terminal, cannot detect the hand when the hand is close to the screen. Accordingly, a form in which the tablet terminal 40 detects only a detection area away therefrom to some extent by the imaging unit 15 and detects contact by the touch panel may be used.

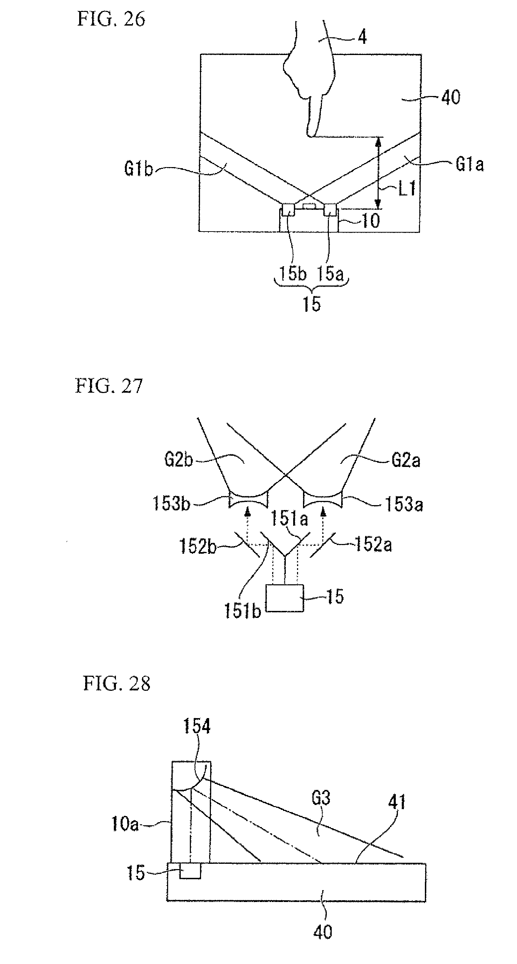

Although a form in which the spatial position extraction unit extracts the position of the tip part in the depth direction on the basis of the position and size (the width of the finger) of the hand (the tip of the finger) on the second image, the invention is not limited thereto. For example, as shown in FIG. 26, a form in which the imaging unit 15 includes two imaging units (15a, 15b) having different angles (G1a, G1b) of view, and the detection device 10a (tablet terminal 40) calculates the position (distance L1) of the tip part in the depth direction on the basis of parallax between the two imaging units (15a, 15b) may be used.

When calculating the distance of the tip part in the depth direction using parallax, as shown in FIG. 27, the detection device 10a may realize different angles (G2a, G2b) of view by the single imaging unit 15 using mirrors (151a, 151b, 152a, and 152b) and concave lenses (153a, 153b).

When the imaging unit 15 has an automatic focus (AF) function, the detection device 10a may detect the distance of the tip part in the depth direction using the AF function of the imaging unit 15.

When the imaging unit 15 shown in FIG. 22 is arranged so as to be looked up from below, a form in which the imaging unit 15 includes a wide-angle lens may be used. Two or more imaging units 15 may be arranged. For example, a form in which the imaging units 15 may be arranged at the four corners (four locations) of the display surface of the display unit 401 may be used.

As shown in FIG. 28, a form in which the detection device 10a uses the imaging unit 15 embedded in the tablet terminal 40 may be used. In this case, a form in which the detection device 10a includes a mirror 154, and in which the imaging unit 15 images the range (angle G3 of view) of the display surface of the display unit 401 reflected by the mirror 154 may be used.

Although in the fifth embodiment, a form in which the detection device 10a is applied to the tablet terminal 40 as an example of an electronic apparatus has been described, an application form to the other electronic apparatus, such as a mobile phone, may be used.

Although in the fifth embodiment, a form in which the detection device 10a is applied to the tablet terminal 40 has been described, a form in which the detection device 10 of each of the first and second embodiments is applied to the tablet terminal 40 may be used.

### DESCRIPTION OF THE REFERENCE SYMBOLS

10, 10a: detection device, 11: infrared light irradiation unit, 15: imaging unit, 17: object extraction unit, 18: indication point extraction unit, 19, 19a: detection unit, 20, 20a: input device, 30, 30a, 30b: projector, 31: projection unit, 40: tablet terminal, 191: spatial position extraction unit

## Claims

1. A detection device comprising:
an imaging unit which images a wavelength region of infrared light,
an irradiation unit which irradiates first infrared light for detecting a tip part of an indication part on a detection target surface and second infrared light to be irradiated onto a region farther away from the detection target surface than the first infrared light, and
a detection unit which detects an orientation of the indication part on the basis of an image imaged by the imaging unit by irradiating the first infrared light and the second infrared light, and detects a position of the tip part on the detection target surface on the basis of an image region of the tip part extracted on the basis of an image imaged by irradiating the first infrared light and the detected orientation of the indication part.

2. The detection device according to claim 1,
wherein the first infrared light and the second infrared light are parallel light which is parallel to the detection target surface.

3. The detection device according to claim 1,
wherein the first infrared light is parallel light which is parallel to the detection target surface, and the second infrared light is diffusion light which is diffused in a direction perpendicular to the detection target surface.

4. The detection device according to any one of claims 1 to 3,
wherein the irradiation unit irradiates the first infrared light and the second infrared light in a switching manner in accordance with an imaging timing of the imaging unit, and
the detection unit detects the orientation of the indication part on the basis of a first image imaged by irradiating the first infrared light and a second image imaged by the imaging unit by irradiating the second infrared light.

5. The detection device according to claim 4,
wherein the irradiation unit irradiates the first infrared light and the second infrared light with different light intensities.

6. The detection device according to claim 5,
wherein the detection unit extracts an image region of the indication part and an image region of the tip part on the basis of a difference image between the first image and the second image imaged by irradiation with different light intensities, detects the orientation of the indication part on the basis of the extracted image region of the indication part, and detects the position of the tip part on the basis of the detected orientation of the indication part and the image region of the tip part.

7. The detection device according to claim 6,
wherein the detection unit multi-values the difference image and extracts the image region of the indication part and the image region of the tip part on the basis of the multi-valued difference image.

8. The detection device according to claim 4,
wherein the imaging unit further images a third image which is an image during a period in which both of the first infrared light and the second infrared light are not irradiated, and
the detection unit extracts the image region of the indication part and the image region of the tip part on the basis of a difference image between the first image and the third image and a difference image between the second image and the third image, detects the orientation of the indication part on the basis of the extracted image region of the indication part, and detects the position of the tip part on the basis of the detected orientation of the indication part and the image region of the tip part.

9. The detection device according to any one of claims 6 to 8,
wherein the detection unit detects the orientation of the indication part by either or a combination of pattern matching by comparison between a pattern of the image region of the indication part and a predefined reference pattern, a position where a boundary of a detection range designated in advance within an imaging range of the imaging unit overlaps the image region of the indication part and a motion vector of the image region of the indication part.

10. The detection device according to any one of claims 6 to 9,
wherein the detection unit detects positions of a plurality of tip parts on the basis of the orientation of the indication part and the image region of the tip part.

11. The detection device according to any one of claims 4 to 10,
wherein the detection unit detects the position of the tip part in a space, in which the indication part moves within the imaging range of the imaging unit, on the basis of the second image.

12. The detection device according to claim 11,
wherein the irradiation unit sequentially irradiates a plurality of pieces of second infrared light with different irradiation ranges in a vertical direction with respect to the detection target surface,
the imaging unit images a plurality of second images corresponding to the respective pieces of second infrared light, and
the detection unit detects the position of the tip part in the vertical direction on the basis of the plurality of second images.

13. The detection device according to claim 11,
wherein the detection unit extracts the image region of the indication part on the basis of the second image, and detects the position of the tip part in the vertical direction with respect to the detection target surface on the basis of the position and size of the tip part on the second image in the extracted image region of the indication part.

14. The detection device according to any one of claims 11 to 13,
wherein the detection unit extracts the image region of the indication part on the basis of the second image, and detects the position of the tip part in a horizontal direction with respect to the detection target surface on the basis of the position and size of the extracted image region of the indication part on the second image.

15. An input device comprising:
the detection device according to any one of claims 1 to 14.

16. A projector comprising:
the input device according to claim 15, and
a projection unit which projects an image onto the detection target surface.

17. An electronic apparatus comprising:
the detection device according to any one of claims 1 to 14.
